# EUROPEAN PATENT APPLICATION

(11) **EP 4 686 970 A1**
(43) Date of publication of application: **04.02.2026**
(21) Application number: 25193344.6
(22) Date of filing: 01.08.2025
(51) Int. Cl.: G02B 6/38, G02B 6/42

(54) **OPTICAL-FIBER ADAPTER**

(30) Priority: 01.08.2024 US 202463678260 P
(71) Applicant: Acon Optics Communications Inc., New Taipai City 231 (TW)
(72) Inventor: CUI, Yang-Yang, New Taipei City 231 (TW); ZHANG, Rui, New Taipei City 231 (TW)
(74) Representative: Viering, Jentschura & Partner mbB Patent- und Rechtsanwälte

(57) **Abstract**

An optical-fiber adapter (100) includes an adapter body (1), an optical transceiver module (2), a conductive module (3), and a positioning base (4).One end of the adapter body (1) has a mating side (11), and the mating side (11) has an insertion opening (111) in communication with the receiving cavity (10).Four side walls of the adapter body (1) define a receiving cavity (10).The adapter body (1) has an assembling groove (112) in communication with the receiving cavity (10).The optical transceiver module (2) is retained in the receiving cavity (10).The conductive module (3) includes conductive terminals (32).One of two ends of each conductive terminal (32) is in the receiving cavity (10) and adjacent to the assembling groove (112), and the other end of each conductive terminal (32) extends out of the assembling groove (112) from the receiving cavity (10). Two sides of the positioning base (4) have grooves (46) and positioning portions (482), and the positioning portions (482) are adjacent to openings of the grooves (46).

## Description

### FIELD OF THE INVENTION

The instant disclosure relates to an adapter, and more particular to an optical-fiber adapter.

### BACKGROUND

The optical-fiber cable serves as a tool for optical transmission. An optical-fiber connector assembly includes a female adapter and two male optical-fiber connectors respectively mated with two ends of the female adapter. Therefore, engagement and data transmission between the adapter and the connectors can be achieved. A lucent connector (LC) type optical-fiber adapter known to the inventor is utilized as an optical transmission connector for LC-type optical-fiber cables to transmit optical signals. However, the LC-type adapter fails to provide additional functions.

### SUMMARY OF THE INVENTION

As to the connection cables in vehicle mounted devices known to the inventor, copper cables are utilized; due to the bandwidth limitation of the copper cables, the transmission requirements for vehicle-mounted devices cannot be satisfied upon using the copper cables. In view of these, one or some embodiments of the instant disclosure provide an optical-fiber adapter. The optical-fiber adapter comprises an adapter body, an optical transceiver module, a conductive module, and a positioning base. One end of the adapter body has a mating side. Four side walls of the adapter body define a receiving cavity, the mating side of the adapter body has an insertion opening in communication with the receiving cavity. The four side walls of the adapter body are a first side wall, a second side wall, a blocking wall, and a combining base wall, respectively. The first side wall and the second side wall of the adapter body are respectively connected to two sides of the combining base wall and two sides of the blocking wall. The adapter body has an assembling groove at the combining base wall and in communication with the receiving cavity. The optical transceiver module is retained in the receiving cavity. The conductive module is retained in the receiving cavity. The conductive module comprises a plurality of conductive terminals. One of two ends of each of the conductive terminals is in the receiving cavity and adjacent to the assembling groove, and the other end of each of the conductive terminals extends out of the assembling groove from the receiving cavity. Two sides of the positioning base have a plurality of grooves and a plurality of positioning portions, and the positioning portions are adjacent to openings of the grooves.

In some embodiments, the conductive module comprises a terminal base combined with the conductive terminals. The terminal base comprises a base portion and a tongue portion outward extending from a side surface of the base portion, the base portion and the tongue portion are in the receiving cavity, the base portion comprises a first curved groove, and the optical transceiver module abuts against the first curved groove.

In some embodiments, the one end of each of the conductive terminals has a mating portion, the mating portions of the conductive terminals are arranged at two sides of the tongue portion, the other end of each of the conductive terminals has a soldering portion exposed from the adapter body, and each of the mating portions is substantially perpendicular to a corresponding one of the soldering portions.

In some embodiments, the terminal base has a plurality of first grooves at two sides of the base portion, and the terminal base comprises a plurality of first positioning portions at the two sides of the base portion and adjacent to openings of the first grooves.

In some embodiments, the positioning base has a plurality of second grooves at the two sides of the positioning base, the terminal base comprises a plurality of second positioning portions at the two sides of the positioning base and adjacent to openings of the second grooves, the positioning base comprises a second curved groove, and the optical transceiver module abuts against the second curved groove.

In some embodiments, the optical transceiver module comprises a housing, an optical mating terminal, a transmitter optical sub-assembly, and a receiver optical sub-assembly. The optical mating terminal and the transmitter optical sub-assembly are respectively connected to two ends of the housing, and the receiver optical sub-assembly is connected to one side of the housing.

In some embodiments, the optical transceiver module comprises a flange portion at an outer side of the optical mating terminal, the terminal base has a limiting recess in the first curved groove, an inner side of the adapter body comprises two limiting protrusions, and the flange portion is adapted to be engaged among the limiting recess and the limiting protrusions.

In some embodiments, the optical transceiver module comprises a flexible circuit board, one of two ends of the flexible circuit board is connected to the receiver optical sub-assembly, and the other end of the flexible circuit board extends out of the assembling groove. A side end of a control circuit board has a notch, and the flexible circuit board passes through the notch and is connected to a contact region of the control circuit board.

In some embodiments, the adapter body has a plurality of first guiding portions, a plurality of second guiding portions, a plurality of first engaging portions, and a plurality of second engaging portions. The first guiding portions and the second guiding portions are respectively at an inner side of the first side wall and an inner side of the second side wall and adjacent to the assembling hole, the two sides of the terminal base are adapted to be limited by the first guiding portions, and the two sides of the positioning base are adapted to be limited by the second guiding portions. Each of the first engaging portions is engaged with a corresponding one of the first positioning portions, and each of the second engaging portions is engaged with a corresponding one of the second positioning portions.

In some embodiments, the adapter body has a recessed portion disposed at the mating side and adjacent to the insertion opening.

According to one or some embodiments of the instant disclosure, through the configuration that the conductive module is provided in the adapter body of the optical-fiber adapter, the optical-fiber adapter can transmit both optical signals and electric power.

### BRIEF DESCRIPTION OF THE DRAWINGS

The instant disclosure will become more fully understood from the detailed description given herein below for illustration only, and thus not limitative of the instant disclosure, wherein:
Fig. 1 illustrates an exploded view of an optical-fiber adapter according to an exemplary embodiment of the instant disclosure;
Fig. 2 illustrates an exploded view of the optical-fiber adapter of the exemplary embodiment of the instant disclosure, where the optical-fiber adapter and an optoelectronic connector are not assembled with each other yet;
Fig. 3 illustrates a perspective view of the optical-fiber adapter of the exemplary embodiment of the instant disclosure, from a bottom viewing angle;
Fig. 4 illustrates a cross-sectional view of the adapter body of the optical-fiber adapter of the exemplary embodiment of the instant disclosure;
Fig. 5 illustrates a perspective view of the optical transceiver module of the exemplary embodiment of the instant disclosure, where the optical transceiver module is assembled on a control circuit board, and an end portion of the transmitter optical sub-assembly of the optical transceiver module is provided with pins connected to the control circuit board;
Fig. 6 illustrates a perspective view of the conductive module of the optical-fiber adapter of the exemplary embodiment of the instant disclosure;
Fig. 7 illustrates a perspective view of the positioning base of the optical-fiber adapter of the exemplary embodiment of the instant disclosure;
Fig. 8. illustrates a top view of the optical-fiber adapter of the exemplary embodiment of the instant disclosure;
Fig. 9 illustrates an assembled cross-sectional view of the optical-fiber adapter of the exemplary embodiment of the instant disclosure, where the optical-fiber adapter and the optoelectronic connector are assembled with each other;
Fig. 10 illustrates an exploded view of the optical transceiver module of the exemplary embodiment of the instant disclosure;
Fig. 11 illustrates a perspective view of the optical transceiver module according to an exemplary embodiment of the instant disclosure, where the optical transceiver module is assembled on a control circuit board, and an end portion of the transmitter optical sub-assembly of the optical transceiver module is provided with a flexible circuit board connected to the control circuit board; and
Fig. 12 illustrates an assembled cross-sectional view of the optical-fiber adapter of the exemplary embodiment of the instant disclosure, where the optical-fiber adapter and the optoelectronic connector are assembled with each other, and an end portion of the transmitter optical sub-assembly of the optical transceiver module is provided with a flexible circuit board connected to the control circuit board.

### DETAILED DESCRIPTION

To enable persons having ordinary skills in the art to better understand and implement, the purposes, technical features, and advantages of the instant disclosure, the technical features and implementation methods of the instant disclosure are described in detail in the following paragraphs in conjunction with the accompanying drawings, and preferred embodiments are enumerated for further illustration. However, the following embodiments are not intended to limit the claim scope of the instant disclosure, and the drawings referenced in the following paragraphs are schematic representations related to the features of the instant disclosure. To provide a clearer explanation, in the schematic drawings provided herein, the first axis X represents the X-axis of a three-dimensional coordinate system, the second axis Y represents the Y-axis of the three-dimensional coordinate system, and the third axis Z represents the Z-axis of the three-dimensional coordinate system. Regarding the term related to "connections" described in the following embodiments, unless specifically stated as electrical connections, the connections may be physical connections, or refer to direct or indirect connections between physical components.

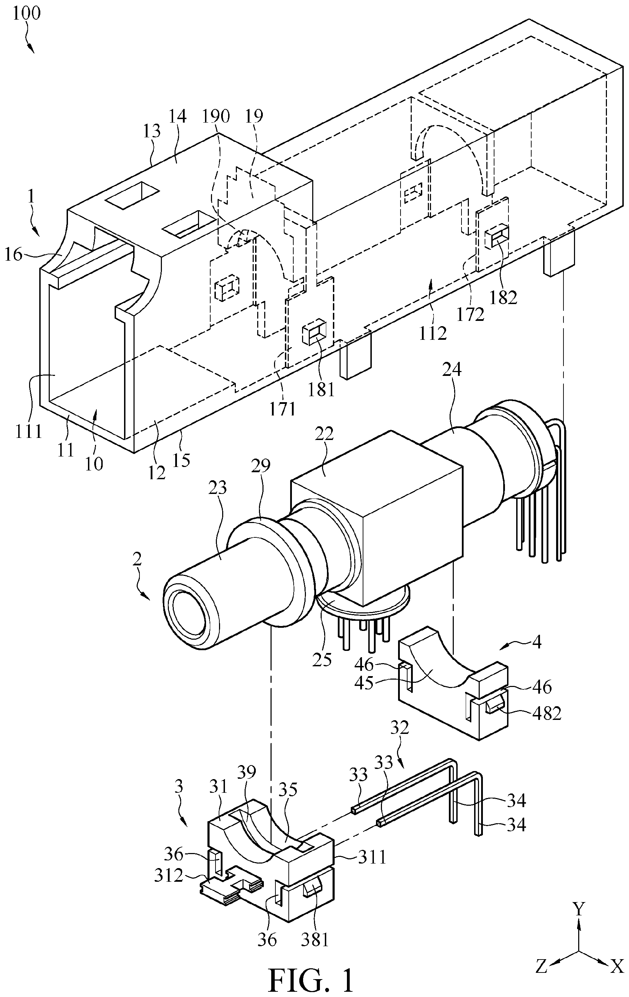

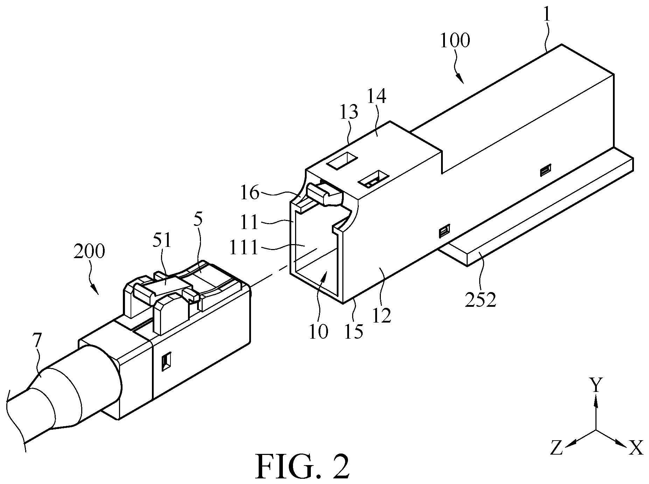

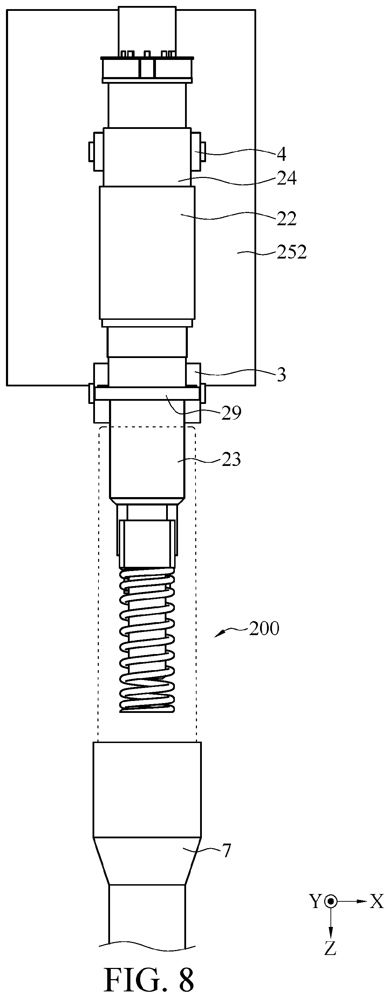

Please refer to Fig. 1 and Fig. 2. Fig. 1 illustrates an exploded view of an optical-fiber adapter 100. Fig. 2 illustrates an exploded view of the optical-fiber adapter 100, where the optical-fiber adapter 100 and an optoelectronic connector 200 are not assembled with each other yet. The optical-fiber adapter 100 is adapted to be utilized in a vehicle and inserted by an optoelectronic connector 200 (as shown in Fig. 8, Fig. 9, and Fig. 12), and the optical-fiber adapter 100 is provided for optical signal and electric power transmission. The optical-fiber adapter 100 is mounted on the vehicle; when the user wants to replace a new optoelectronic connector 200 or a new optical-fiber adapter 100 with the old one, the user just needs to detach the optoelectronic connector 200 from the optical-fiber adapter 100, rather than cutting the transmission wires connected to the optoelectronic connector 200. The optical-fiber adapter 100 comprises an adapter body 1, an optical transceiver module 2, a conductive module 3, and a positioning base 4.

Please refer to Fig. 1 and Fig. 2. The adapter body 1 is a hollow and elongate rectangular structure. One end of the adapter body 1 has a mating end 11 provided for being mated with the optoelectronic connector 200. Four side walls of the adapter body 1 define a receiving cavity 10. The mating side 11 of the adapter body 1 has an insertion opening 111 in communication with the receiving cavity 10, and the insertion opening 111 faces outward along the third axis (Z direction). The insertion opening 111 of the adapter body 1 is provided for being inserted by an optoelectronic connector, so that the optical-fiber adapter 1 provides a configuration that one side of the optical-fiber adapter 1 is being inserted by an optoelectronic connector 200.

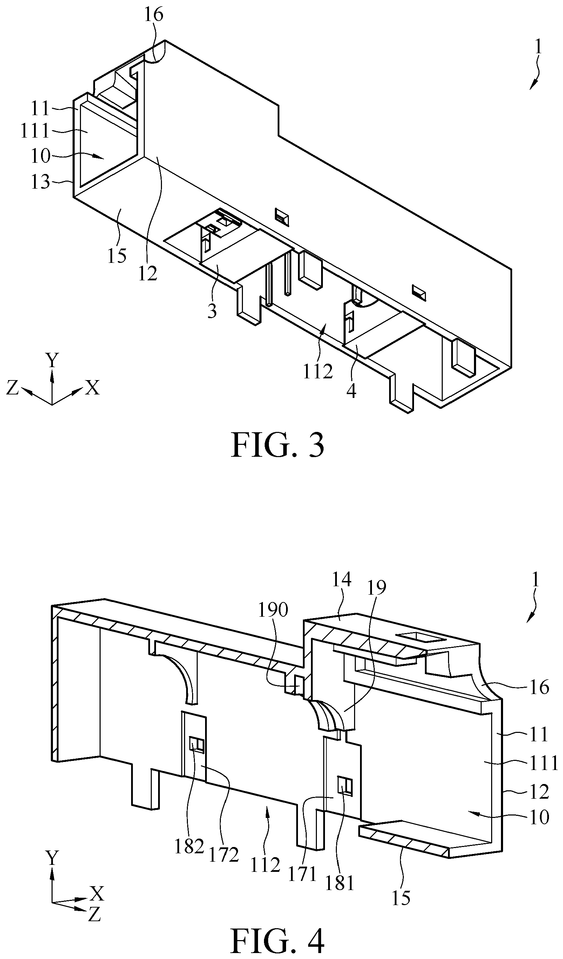

Please refer to Fig. 2 and Fig. 3. Fig. 3 illustrates a perspective view of the optical-fiber adapter 100, from a bottom viewing angle. The four side walls of the adapter body 1 are a first side wall 12, a second side wall 13, a blocking wall 14, and a combining base wall 15, respectively. The first side wall 12 and the second side wall 13 are arranged along the second axis (Y direction), and the blocking wall 14 and the combining base wall 15 are arranged along the first axis (X direction). The first side wall 12 and the second side wall 13 are respectively connected to two sides of the combining base wall 14 and two sides of the blocking wall 15. The adapter body 1 has a recessed portion 16 disposed at the mating side 11 and adjacent to the insertion opening 111.. The adapter body 1 also has an assembling groove 112 at the combining base wall 15 and in communication with the receiving cavity 10, and the assembling groove 112 faces outward along the second axis (Y direction). Please refer to Fig. 3. Upon viewing the optical-fiber adapter 100 from the second axis (Y direction), the assembling groove 112 is an elongated groove; moreover, upon measuring the length of the assembling groove 112 along the third axis (Z direction), the length of the assembling groove 112 is greater than half of the entire length of the combining base wall 15. Accordingly, the assembling groove 112 is provided with a longer length, facilitating the optical transceiver module 2, the conductive module 3, and the positioning base 4 to be assembled in the receiving cavity 10 through the assembling groove 112 conveniently.

Please refer to Fig. 1, Fig. 3, and Fig. 4. Fig. 4 illustrates a cross-sectional view of the adapter body 1 of the optical-fiber adapter 100. In this embodiment, each of two sides of the adapter body 1 has two guiding portions and two engaging portions; the guiding portions comprise a first guiding portion 171 and a second guiding portion 172, and the engaging portions comprise a first engaging portion 181 and a second engaging portion 182. Each of the first guiding portions 171 and each of the second guiding portions 172 are respectively arranged on an inner side of the first side wall 12 and on an inner side of the second side wall 13. The first guiding portion 171 is configured as a first slide groove having a rectangular shape, the second guiding portion 172 is configured as a second slide groove having a rectangular shape, and a width of the first slide groove is greater than a width of the second slide groove. Each of the first engaging portions 181 and each of the second engaging portions 182 are respectively arranged on the inner side of the first side wall 12 and on the inner side of the second side wall 13, and each of the first engaging portions 181 and each of the second engaging portions 182 are adjacent to the opening of the assembling groove 112. Each of the first engaging portions 181 is arranged in a corresponding one of the first guiding portions 171, and each of the second engaging portions 182 is arranged in a corresponding one of the second guiding portions 172. In this embodiment, the first engaging portion 181 and the second engaging portion 182 are positioning holes, but the instant disclosure is not limited thereto; in some other embodiments, the first engaging portion 181 and the second engaging portion 182 may be protruding blocks.

Please refer to Fig. 1. The optical transceiver module 2 is served as an optical network unit (ONU), and the optical transceiver module 2 is utilized for signal transmission between optical line terminals (OLTs) and capable of transmitting signals to various interfaces.

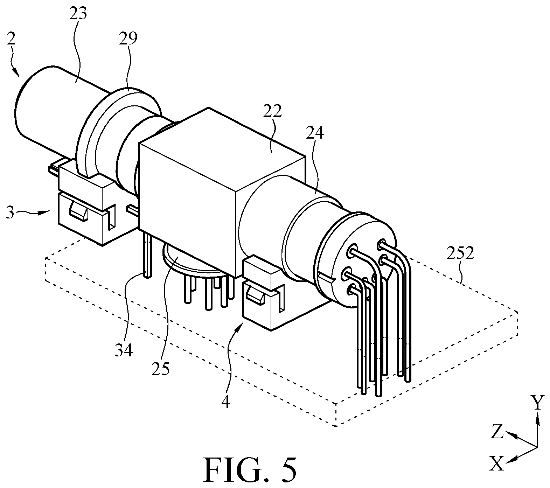

Please refer to Fig. 1 and Fig. 5. Fig. 5 illustrates a perspective view of the optical transceiver module 2, where the optical transceiver module 2 is assembled on a control circuit board 252, and an end portion of the transmitter optical sub-assembly 24 of the optical transceiver module 2 is provided with pins connected to the control circuit board 252. The optical transceiver module 2 comprises a housing 22, an optical mating terminal 23, a transmitter optical sub-assembly24, and a receiver optical sub-assembly 25. The optical mating terminal 23 and the transmitter optical sub-assembly 24 are respectively connected to two ends of the housing 22, and the receiver optical sub-assembly 25 is connected to one side of the housing 22. Accordingly, one or some embodiments can provide an optical-fiber connector 100 capable of supplying electric power and transmitting optical signals at the same time.

In some embodiments, the optical transceiver module 2 is a bi-directional optical sub-assembly (BOSA) including both the transmitter optical sub-assembly 24 (TOSA) and the receiver optical sub-assembly 25 (ROSA). The transmitter optical sub-assembly 24 is configured to convert electrical signals into optical signals, and the receiver optical sub-assembly 25 is configured to convert optical signals into electrical signals, so that the optical transceiver module 2 capable of performing optical-electrical conversion or electrical-optical conversion can be implemented. In some embodiments, a function module is provided in the housing 22 of the optical transceiver module 2 for performing optical-electrical conversion or electrical-optical conversion.

Please refer to Fig. 1, Fig. 3, and Fig. 4. When the terminal base 3 and the positioning base 4 are assembled in the adapter body 1, the two sides of the terminal base 3 are respectively limited by the first guiding portions 171, and the two sides of the positioning base 4 are respectively limited by the second guiding portions 172. Each of the first positioning portions 381 of the terminal base 3 is engaged with a corresponding one of the first engaging portions 181, and each of the second positioning portions 482 of the positioning base 4 is engaged with a corresponding one of the second engaging portions 182. The terminal base 3 and the positioning base 4 respectively abut against a bottom portion of the optical transceiver module 2, thereby ensuring the optical transceiver module 2 to be positioned at a correct relative position in the receiving cavity 10. Moreover, after the optical transceiver module 2 is assembled in the receiving cavity 10, the rotation of the optical transceiver module 2 can be limited, thereby improving the structural robustness of the optical-fiber adapter 100.

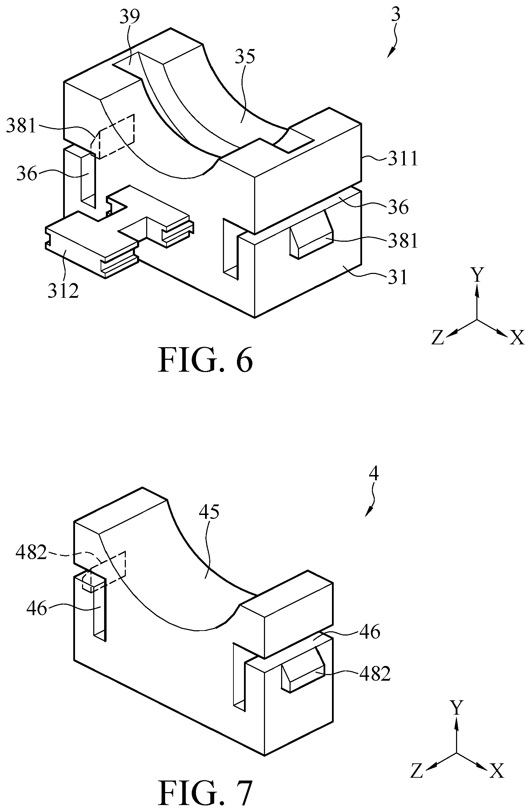

Please refer to Fig. 1, Fig. 5, and Fig. 6. Fig. 5 illustrates a perspective view of the optical transceiver module 2, where the optical transceiver module 2 is assembled on a control circuit board 252, and an end portion of the transmitter optical sub-assembly 24 of the optical transceiver module 2 is provided with pins connected to the control circuit board 252. Fig. 6 illustrates a perspective view of the conductive module 3 of the optical-fiber adapter 100. The conductive module 3 comprises a terminal base 31 and a plurality of conductive terminals 32. The terminal base 31 comprises a base portion 311 and a tongue portion 312 extending from a side surface of the base portion 311. The base portion 311 and the tongue portion 312 are in the receiving cavity 10, the base portion 311 comprises a first curved groove 35 recessed from a top portion of the base portion 311 along the second axis (Y direction), and the optical transceiver module 2 abuts against the first curved groove 35. The conductive terminals 32 are combined with the terminal base 31. One of two ends of each of the conductive terminals 32 has a mating portion 33, the mating portions 33 of the conductive terminals 32 are arranged at two sides of the tongue portion 312, the other end of each of the conductive terminals 32 has a soldering portion 34 exposed from the adapter body 1, and each of the mating portions 33 is substantially perpendicular to a corresponding one of the soldering portions 34 (as shown in Fig. 1). When the conductive module 3 is assembled in the adapter body 1, the one end of each of the conductive terminals 32 is assembled into the receiving cavity 10 through the assembling groove 112, so that the one end of each of the conductive terminals 32 is positioned and adjacent to the assembling groove 112, and the other end of each of the conductive terminals 32 extends out of the assembling groove 112 from the receiving cavity 10.

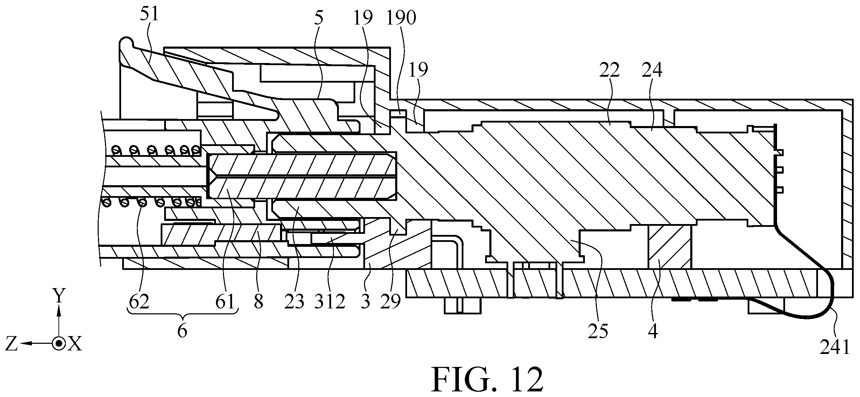

Please refer to Fig. 1, Fig. 5, and Fig. 6. The optical transceiver module 2 further comprises a flange portion 29 at an outer side of the optical mating terminal 23. The terminal base 31 has a limiting recess 39 in the first curved groove 35. The limiting recess 39 is a groove which is curved and elongated, and the limiting recess 39 is recessed from a top portion of the base portion 311 along the second axis (Y direction). An inner side of the adapter body 1 comprises two limiting protrusions 19. Each of the limiting protrusions 19 is a sheet extending along the second axis (Y direction) and configured as an arch structure. The limiting protrusions 19 are arranged side-by-side along the third axis (Z direction) and spaced by a pitch 190 (as shown in Fig. 12). The flange portion 29 is adapted to be engaged among the limiting recess 39 and the limiting protrusions 19.

Please refer to Fig. 1, Fig. 5, and Fig. 6. The terminal base 31 has a plurality of first grooves 36 at the two sides of the base portion 311. Upon viewing the front of the terminal base 31 along the third axis (Z direction), the first groove 36 at the right side of the terminal base 31 is an inverse L-shaped structure, and the first groove 36 at the left side of the terminal base 31 is a reverse L-shaped structure. Moreover, the first grooves 36 are defined through the terminal base 31 from the front face to the rear face. The terminal base 31 comprises a plurality of first positioning portions 381, the first positioning portions 381 are at the two sides of the base portion 311 and adjacent to openings of the first grooves 36. In one embodiment, the first positioning portion 381 is a protruding block, but the instant disclosure is not limited thereto; in some other embodiments, the first positioning portion 381 may be a positioning hole. Accordingly, when the conductive module 3 is assembled in the receiving cavity 10 and abuts against one side of the optical transceiver module 2, the first positioning portions 381 at the two sides of the terminal base 31 are engaged with the first engaging portions 181 at the inner side of the first side wall 12 and the inner side of the second side wall 13 of the adapter body 1, so that the optical transceiver module 2 can be stably placed in the receiving cavity 10 of the adapter body 1.

Please refer to Fig. 1 and Fig. 7. Fig. 7 illustrates a perspective view of the positioning base 4 of the optical-fiber adapter 100. The positioning base 4 has a plurality of second grooves 46 at two sides of the positioning base 4. Upon viewing the front of the positioning base 4 along the third axis (Z direction), the second groove 46 at the right side of the positioning base 4 is an inverse L-shaped structure, and the second groove 46 at the left side of the positioning base 4 is a reverse L-shaped structure. Moreover, the second grooves 46 are defined through the positioning base 4 from the front face to the rear face. The positioning base 4 comprises a plurality of second positioning portions 482, the second positioning portions 482 are at the two sides of the positioning base 4 and adjacent to openings of the second grooves 46. The positioning base 4 has a second curved groove 45, and the optical transceiver module 2 abuts against the second curved groove 45. In one embodiment, the second positioning portion 482 is a protruding block, but the instant disclosure is not limited thereto; in some other embodiments, the second positioning portion 482 may be a positioning hole. Accordingly, when the positioning base 4 is assembled in the receiving cavity 10 and abuts against one side of the optical transceiver module 2, the second positioning portions 482 at the two sides of the positioning base 4 are engaged with the second engaging portions 182 at the inner side of the first side wall 12 and the inner side of the second side wall 13 of the adapter body 1, so that the optical transceiver module 2 can be stably placed in the receiving cavity 10 of the adapter body 1.

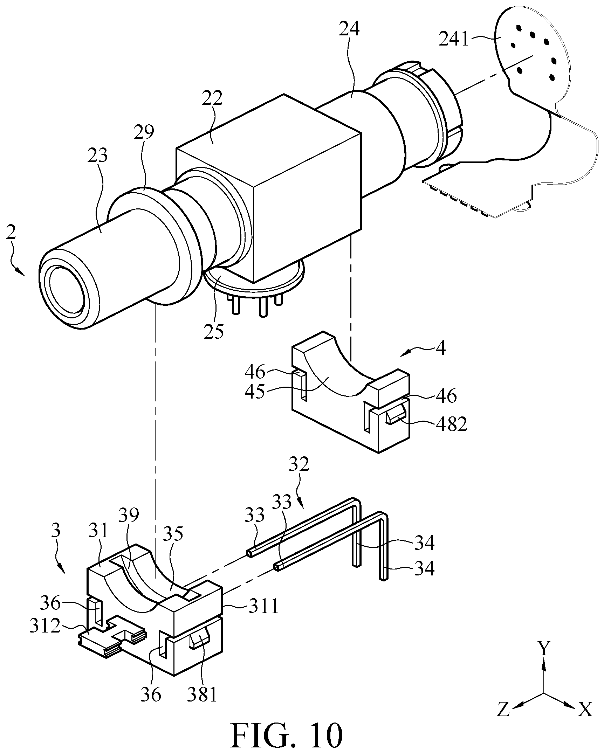

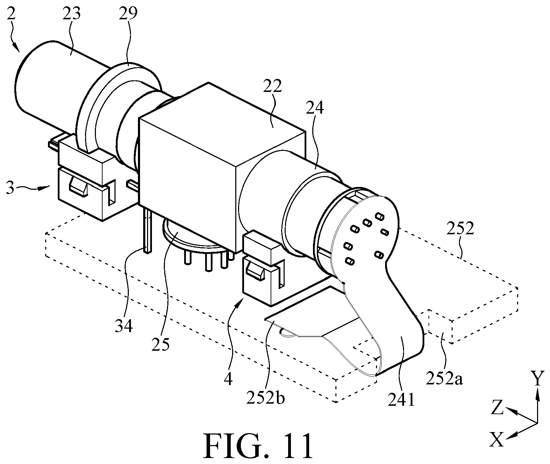

Please refer to Fig. 10 and Fig. 11. Fig. 10 illustrates an exploded view of the optical transceiver module 2, where the optical transceiver module 2 and the adapter body 1 are not assembled with each other yet. Fig. 11 illustrates a perspective view of the optical transceiver module 2. In some embodiments, the optical transceiver module 2 comprises a flexible circuit board 241. One of two ends of the flexible circuit board 241 is connected to the transmitter optical sub-assembly 24, and the other end of the flexible circuit board 241 extends out of the assembling groove 112. The optical-fiber adapter 100 is assembled on the control circuit board 252, a side end of the control circuit board 252 has a notch 252a, and the flexible circuit board 241 passes through the notch 252a and is connected to a contact region 252b of the control circuit board 252.

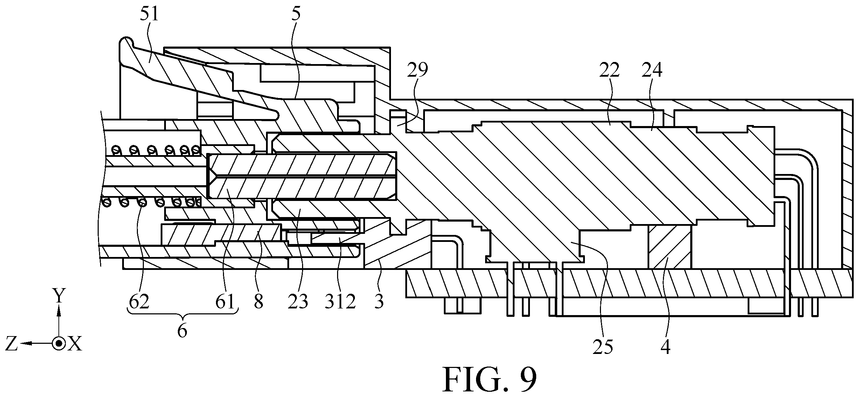

Please refer to Fig. 9 and Fig. 12. Fig. 9 and Fig. 12 illustrate assembled cross-sectional views of the optical-fiber adapter 100, where the optical-fiber adapter 100 and the optoelectronic connector 200 are assembled with each other. The insertion opening 111 of the adapter body 1 of the optical-fiber adapter 100 is provided for being inserted by the optoelectronic connector 200. The optoelectronic connector 200 comprises a coupling member 5 and a flexible arm 51 on the coupling member 5. A core component 6 is in the coupling member 5, and the core component 6 comprises an insertion pin 61 and a spring 62 fitted over the insertion pin 61. The insertion pin 61 of the core component 6 is exposed from one of two ends of the coupling member 5, a tail cap 7 is fitted over the other end of the coupling member 5, and the tail cap 7 may be fitted over a transmission wire. The optoelectronic connector 200 comprises an electrical connection module 8 at a bottom portion of the coupling member 5. Accordingly, when the optoelectronic connector 200 is inserted into the receiving cavity 10 of the optical-fiber adapter 100 through the insertion opening 111, the electrical connection module 8 of the optoelectronic connector 200 contacts the conductive module 3 of the optical-fiber adapter 100, thereby achieving the electric power transmission. Moreover, the insertion pin 61 of the core component 6 of the optoelectronic connector 200 is mated with the optical transceiver module 2, thereby achieving the optical signal transmission. According to one or some embodiments of the instant disclosure, through the combined optoelectronic transmission, after the optoelectronic connector 200 is mated with the optical-fiber adapter 100, the signal can be transmitted stably, thereby meeting the requirements of complex automotive environments and satisfying waterproofing, vibration resistance, corrosion resistance, and high temperature/high humidity testing standards.

According to one or some embodiments of the instant disclosure, through the configuration that the conductive module 2 is provided in the adapter body 1 of the optical-fiber adapter 100, the optical-fiber adapter 100 can transmit both optical signals and electric power.

## Claims

1. An optical-fiber adapter (100) comprising:
an adapter body (1), wherein one end of the adapter body (1) has a mating side (11); four side walls of the adapter body (1) define a receiving cavity (10), and the mating side (11) of the adapter body (1) has an insertion opening (111) in communication with the receiving cavity (10); the four side walls of the adapter body (1) are a first side wall (12), a second side wall (13), a blocking wall (14), and a combining base wall (15), respectively; the first side wall (12) and the second side wall (13) of the adapter body (1) are respectively connected to two sides of the combining base wall (15) and two sides of the blocking wall (14); the adapter body (1) has an assembling groove (112) at the combining base wall (15) and in communication with the receiving cavity (10);
an optical transceiver module (2) retained in the receiving cavity (10);
a conductive module (3) retained in the receiving cavity (10) and abutting against one of two sides of the optical transceiver module (2), wherein the conductive module (3) comprises a plurality of conductive terminals (32), one of two ends of each of the conductive terminals (32) is in the receiving cavity (10) and adjacent to the assembling groove (112), and the other end of each of the conductive terminals (32) extends out of the assembling groove (112) from the receiving cavity (10); and
a positioning base (4) retained in the receiving cavity (10) and abutting against the other side of the optical transceiver module (2), wherein two sides of the positioning base (4) have a plurality of grooves (46) and a plurality of positioning portions (482), and the positioning portions (482) are adjacent to openings of the grooves (46).

2. The optical-fiber adapter (100) according to claim 1, wherein the conductive module (3) comprises a terminal base (31) combined with the conductive terminals (32), the terminal base (31) comprises a base portion (311) and a tongue portion (312) outward extending from a side surface of the base portion (311), the base portion (311) and the tongue portion (312) are in the receiving cavity (10), the base portion (311) comprises a first curved groove (35), and the optical transceiver module (2) abuts against the first curved groove (35).

3. The optical-fiber adapter (100) according to claim 2, wherein the one end of each of the conductive terminals (32) has a mating portion (33), the mating portions (33) of the conductive terminals (32) are arranged at two sides of the tongue portion (312), the other end of each of the conductive terminals (32) has a soldering portion (34) exposed from the adapter body (1), and each of the mating portions (33) is substantially perpendicular to a corresponding one of the soldering portions (34).

4. The optical-fiber adapter (100) according to claim 2, wherein the terminal base (31) has a plurality of first grooves (36) at two sides of the base portion (311), and the terminal base (31) comprises a plurality of first positioning portions (381) at the two sides of the base portion (311) and adjacent to openings of the first grooves (36).

5. The optical-fiber adapter (100) according to claim 4, wherein the positioning base (4) has a plurality of second grooves (46) at two sides of the positioning base (4), the terminal base (31) comprises a plurality of second positioning portions (482) at the two sides of the positioning base (4) and adjacent to openings of the second grooves (46), the positioning base (4) comprises a second curved groove (45), and the optical transceiver module (2) abuts against the second curved groove (45).

6. The optical-fiber adapter (100) according to claim 1, wherein the optical transceiver module (2) comprises a housing (22), an optical mating terminal (23), a transmitter optical sub-assembly (24), and a receiver optical sub-assembly (25), the optical mating terminal (23) and the transmitter optical sub-assembly (24) are respectively connected to two ends of the housing (22), and the receiver optical sub-assembly (25) is connected to one side of the housing (22).

7. The optical-fiber adapter (100) according to claim 6, wherein the optical transceiver module (2) comprises a flange portion (29) at an outer side of the optical mating terminal (23), the terminal base (31) has a limiting recess (39) in the first curved groove (35), an inner side of the adapter body (1) comprises two limiting protrusions (19), and the flange portion (29) is adapted to be engaged among the limiting recess (39) and the limiting protrusions (19).

8. The optical-fiber adapter (100) according to claim 7, wherein the optical transceiver module (2) comprises a flexible circuit board (241), one of two ends of the flexible circuit board (241) is connected to the receiver optical sub-assembly (25), the other end of the flexible circuit board (241) extends out of the assembling groove (112), a side end of a control circuit board (252) has a notch (252a), and the flexible circuit board (241) passes through the notch (252a) and is connected to a contact region (252b) of the control circuit board (252).

9. The optical-fiber adapter (100) according to claim 4, wherein the adapter body (1) has a plurality of first guiding portions (171), a plurality of second guiding portions (172), a plurality of first engaging portions (181), and a plurality of second engaging portions (182), the first guiding portions (171) and the second guiding portions (172) are respectively at an inner side of the first side wall (12) and an inner side of the second side wall (13) and adjacent to the assembling hole (112), the two sides of the terminal base (31) are adapted to be limited by the first guiding portions (171), the two sides of the positioning base (4) are adapted to be limited by the second guiding portions (172), each of the first engaging portions (181) is engaged with a corresponding one of the first positioning portions (381), and each of the second engaging portions (182) is engaged with a corresponding one of the second positioning portions (482).

10. The optical-fiber adapter (100) according to claim 9, wherein the adapter body (1) has a recessed portion (16) disposed at the mating side (11) and adjacent to the insertion opening (111).
